# EUROPÄISCHE PATENTSCHRIFT

(11) **EP 2 957 859 B1**
(45) Veröffentlichungstag und Bekanntmachung des Hinweises auf die Patenterteilung: **08.08.2018**
(21) Anmeldenummer: 14172886.5
(22) Anmeldetag: 18.06.2014
(51) Int. Cl.: G01B 11/14, G02B 23/24, G01N 21/954

(54) **PRÜFVORRICHTUNG UND VERFAHREN ZUM PRÜFEN VON INNENWANDUNGEN EINES HOHLKÖRPERS**
TEST DEVICE AND METHOD FOR TESTING THE INTERIOR WALLS OF A HOLLOW BODY
DISPOSITIF DE CONTRÔLE ET PROCÉDÉ DESTINÉ À CONTRÔLER LES PAROIS INTÉRIEURES D'UN CORPS CREUX

(43) Veröffentlichungstag der Anmeldung: 23.12.2015
(73) Patentinhaber: Sturm Maschinen- & Anlagenbau GmbH, 94330 Salching (DE)
(72) Erfinder: Ullrich, Wolfgang, 82319 Starnberg (DE); Bader, Florian, 82380 Peissenberg (DE)
(74) Vertreter: Wunderlich & Heim Patentanwälte Partnerschaftsgesellschaft mbB

(56) Entgegenhaltungen:
- EP-A1- 1 797 813
- WO-A1-99/15853
- DE-A1- 19 746 662
- DE-A1- 19 813 134
- DE-A1-102004 043 209

## Beschreibung

Die vorliegende Erfindung bezieht sich gemäß Anspruch 1 auf eine Prüfvorrichtung zum Prüfen von Innenwandungen eines Hohlkörpers, insbesondere einer Zylinderbohrung in einem Motorblock. Weiterhin betrifft die Erfindung gemäß dem Anspruch 11 ein Verfahren zum Prüfen von Innenwandungen eines Hohlkörpers.

In der Fertigung von Motorblöcken aber auch verschiedenen anderen Produkten sind die Wandeigenschaften eines Hohlraums von großer Bedeutung. Diese können mit einer speziellen Beschichtung versehen werden. Beispielsweise werden auf die Laufflächen von Zylinderbohrungen in einem Motorblock eines Verbrennungsmotors oder von Arbeitszylindern oftmals Beschichtungen aufgebracht, beispielsweise durch draht- oder pulver-basiertes thermisches Spritzen. Durch geeignete Beschichtungen können prinzipiell zahlreiche Verbesserungen erreicht werden; diese umfassen: Verringerung des Treibstoffverbrauchs von Verbrennungsmotoren, Nutzung von Leichtbaumaterialien, Reibungsverminderung, Verbesserung der Wärmeableitung, kompaktere Bauweisen und Wartungsfreiheit. Für solche Ziele müssen die Beschichtungen innerhalb geringer Toleranzen vorgegebene Oberflächenkennwerte einhalten. Zylinderdefekte, insbesondere Unregelmäßigkeiten der Zylinderinnenwände, und Materialablagerungen sind zu vermeiden. Daher kommt der zuverlässigen Fertigung und Überprüfung von Zylinderflächen eine hohe Bedeutung zu.

Allgemein ist das Anwendungsgebiet der Erfindung nicht auf Motorkomponenten beschränkt, sondern umfasst sämtliche Aufgaben, bei denen Innenwände eines Werkstücks zu untersuchen sind.

Bekannte Prüfvorrichtungen zum Prüfen von Innenwandungen eines Hohlkörpers und bekannte Verfahren zum Prüfen von Innenwandungen eines Hohlkörpers erfordern ein hohes Maß an manuellen Tätigkeiten. Die Durchführung einer für den zu untersuchenden Gegenstand geeigneten Messung sowie die Messauswertung stellen verhältnismäßig hohe Wissensanforderungen an den Benutzer und sind mit hohem Zeitaufwand verbunden. Zudem ist die Fehlerrate hoch.

So kann herkömmlicherweise eine Sichtprüfung der Innenwandungen vorgesehen sein, bei welcher eine Person mit bloßem Auge die Innenwände kontrolliert. Eine noch störende geringe Rauheit kann in dieser Weise jedoch nicht erkannt werden. Eine Ergänzung durch einfache Prüfvorrichtungen, beispielsweise durch Längen- und Abstandsmesser, mit denen der Benutzer den Durchmesser einer Zylinderbohrung bestimmt, ist gleichwohl mit verhältnismäßig hohem Zeitaufwand verbunden. Besonders schwer zu erfüllen sind die Anforderungen an die Zuverlässigkeit einer Kontrollmessung bei geringen Schichtdicken, welche beispielsweise 300µm betragen können.

Die DE 10 2004 043 209 A1 beschreibt ein Verfahren und eine Vorrichtung zur Vermessung der Innenwandung eines Hohlraumes, vorzugsweise einer Bohrungswand. Hierzu ist eine CCD-Kamera vorgesehen, welche einen ringförmigen und von der Oberfläche der Innenwandung reflektierten Messstrahl aufnimmt und somit ein Profil des Hohlkörpers vermisst.

In der DE 198 13 134 A1 ist ein Inspektionsverfahren für Großbehälter beschrieben, welches vorsieht, Bilder mit einer Kamera von den Innenwandungen des Großbehälters zu Inspektionszwecken aufzunehmen.

Nach der DE 197 46 662 A1 ist eine weitere Messanordnung bekannt, die ebenfalls zur Vermessung einer Bohrung vorgesehen ist. Mit einem fächerförmig abgelenkten Lichtstrahl wird mit einer Detektoreinrichtung eine Innenkontur der Bohrung mittels Lichtschnittverfahren erfasst.

Zur Überprüfung einer Zylinderbohrung in einem Motorblock, insbesondere in einem Schiffsmotor, ist nach der WO 99/15853 eine in die Zylinderbohrung absenkbare Messvorrichtung vorgesehen, welche nach deren Positionierung eine Vielzahl von Einzelmessungen auf der Zylinderinnenwandung vornimmt.

Zur Vermessung eines kleinen Hohlraumes sieht die EP 1 797 813 A1 eine optische Messvorrichtung mit konfokalen Abstandssensoren vor. Dabei wird mit Punktlichtquellen die Innenwandung des Hohlraumes an ausgewählten Stellen vermessen.

Als eine **Aufgabe** der Erfindung kann angesehen werden, eine Prüfvorrichtung und ein Verfahren zum Prüfen von Innenwandungen eines Hohlkörpers anzugeben, welche zuverlässig und in kurzer Zeit, insbesondere schritthaltend zu einem Fertigungsprozess, Oberflächeneigenschaften oder -fehler an den Innenwandungen feststellen können.

Diese Aufgabe wird durch die Prüfvorrichtung mit den Merkmalen des Anspruchs 1 und durch das Verfahren mit den Merkmalen des Anspruchs 11 gelöst.

Vorteilhafte Varianten des erfindungsgemäßen Verfahrens und der erfindungsgemäßen Prüfvorrichtung sind Gegenstand der abhängigen Ansprüche und werden außerdem in der folgenden Beschreibung, insbesondere im Zusammenhang mit den Figuren, erläutert.

Eine erfindungsgemäße Prüfvorrichtung zum Prüfen von Innenwandungen eines Hohlkörpers, insbesondere einer Zylinderbohrung in einem Motorblock, umfasst zumindest
- eine Halteeinrichtung zum Halten des Hohlkörpers,
- eine stabförmige Kameraeinrichtung, welche dazu eingerichtet ist, ein Bild quer zu einer Längsachse der stabförmigen Kameraeinrichtung aufzunehmen,
- eine Verstelleinrichtung zum Ein- und Ausfahren der Kameraeinrichtung in den Hohlkörper,
- eine Beleuchtungseinrichtung zum Beleuchten der Innenwandungen des Hohlkörpers,
- elektronische Steuer- und Auswertemittel, welche dazu eingerichtet sind, zum Aufnehmen eines Rundumbilds um die Längsachse der stabförmigen Kameraeinrichtung die Kameraeinrichtung anzusteuern und aus Bilddaten, die von der Kameraeinrichtung aufgenommen werden, Oberflächeneigenschaften der Innenwandungen zu ermitteln, und
- eine Durchmesserermittlungseinrichtung zum Ermitteln eines Innendurchmessers eines Hohlraums des Hohlkörpers,
wobei die Durchmesserermittlungseinrichtung eine Lichtquelle zum Aussenden eines Lichtstrahls auf Innenwandungen des Hohlraums sowie optische Messmittel zum Nachweisen von Licht, welches von den Innenwandungen des Hohlraums kommt, aufweist, und
wobei die Steuer- und Auswertemittel dazu eingerichtet sind, aus Messinformationen der Durchmesserermittlungseinrichtung den Innendurchmesser des Hohlraums zu bestimmen.

Die Kameraeinrichtung und die Durchmesserermittlungseinrichtung können gleichzeitig oder nacheinander entweder denselben Hohlraum oder zwei verschiedene Hohlräume des Hohlkörpers untersuchen. Somit können die vorgenannten Innenwandungen eines Hohlraums, in den die Kameraeinrichtung eingefahren wird, und die Innenwandungen des Hohlraums, die von der Durchmesserermittlungseinrichtung vermessen werden, entweder identisch oder voneinander verschieden sein. Im letzten Fall können nacheinander beide Hohlräume von sowohl der Kameraeinrichtung als auch der Durchmesserermittlungseinrichtung untersucht werden.

Oberflächeneigenschaften können beispielsweise die Rauheit, das Vorhandensein von Kratzern, Spritzern, die Gleichmäßigkeit einer Beschichtung, die Farbe und/oder Helligkeit der Innenwandungen umfassen.

Die Kameraeinrichtung kann dazu gestaltet sein, durch eine einzige Bildaufnahme ein Rundumbild aufzunehmen. Alternativ oder zusätzlich können die Steuer- und Auswertemittel dazu gestaltet sein, die Aufnahme mehrerer Bilder nacheinander zu steuern und diese sodann zu einem Rundumbild zusammenzusetzen. Dazu kann vorgesehen sein, dass die Verstelleinrichtung die Kameraeinrichtung zwischen den verschiedenen Bildaufnahmen um die Längsachse dreht.

Bei einem erfindungsgemäßen Verfahren zum Prüfen von Innenwandungen eines Hohlkörpers wird die erfindungsgemäße Prüfvorrichtung dazu verwendet, dass zum Prüfen der Innenwandungen mit der stabförmigen Kameraeinrichtung mindestens ein Bild aufgenommen wird, während die Kameraeinrichtung von der Verstelleinrichtung in den Hohlkörper eingefahren ist.

Als wesentliche Vorteile wird durch die Erfindung erreicht, dass ein Werkstück mit hoher Präzision und Zuverlässigkeit ohne von einem Benutzer auszuführende Maßnahmen kontrolliert werden kann.

Ein erster Kerngedanke kann darin gesehen werden, durch eine Halteeinrichtung für den Hohlkörper und eine Verstelleinrichtung für die Kameraeinrichtung eine Kamerabewegung zu ermöglichen, die definiert zu dem zu untersuchenden Hohlkörper erfolgt. So kann die für die Messgenauigkeit wichtige Positionierung der Kamera- und der Durchmesserermittlungseinrichtung exakt und reproduzierbar ausgeführt werden. Um in kurzer Zeit und ohne überflüssige Bewegungen die Innenwandungen zu untersuchen, kann die Kameraeinrichtung zur Aufnahme eines Rundumbilds fähig sein. Ein Rundumbild kann ein 360°-Bild darstellen, welches somit den vollständigen zu messenden Bereich in Umfangsrichtung der Innenwandungen abdeckt.

Die Beleuchtungseinrichtung kann eine Auflichteinrichtung umfassen und umfasst zwingend eine Streiflichtbeleuchtungseinrichtung. Als Auflichteinrichtung kann ihre Abstrahloptik neben einer Empfangsoptik der Kameraeinrichtung angeordnet sein. Eine Hauptabstrahlrichtung der Auflichteinrichtung kann im Wesentlichen parallel zu einer Hauptempfangsrichtung der Kameraeinrichtung stehen, beispielsweise in einem Winkel von weniger als 20°.

Eine Streiflichtbeleuchtungseinrichtung ist hingegen so angeordnet, dass Abstrahlrichtungen der Streiflichtbeleuchtungseinrichtung, in welchen sie im Betrieb Innenwandungen beleuchtet, quer zu Empfangsrichtungen stehen, aus welchen die Kameraeinrichtung Licht von den beleuchteten Innenwandungen empfängt. Dadurch können geringe Unebenheiten oder andere Unregelmäßigkeiten der Innenwandungen leicht erfasst werden. So sind Abstrahlrichtungen der Streiflichtbeleuchtungseinrichtung nicht etwa im Wesentlichen parallel zu den Empfangsrichtungen der Kameraeinrichtung. Vielmehr wird eine Streiflichtbeleuchtungseinrichtung genutzt, deren Abstrahlrichtungen quer zu den Empfangsrichtungen stehen, aus welchen die Kameraeinrichtung Licht von den beleuchteten Innenwandungen empfängt. Dadurch kommt ein Schattenwurf bei Höhenvariationen der Innenwandungen stärker zur Geltung.

Unter den Abstrahlrichtungen kann der gesamte Winkelbereich verstanden werden, in dem von einem jeweiligen Punkt der Streiflichtbeleuchtungseinrichtung Licht ausgestrahlt wird. Alternativ kann hierunter derjenige Winkelbereich der Lichtaussendung aufgefasst werden, in dem im Messbetrieb das ausgesendete Licht tatsächlich auch auf Innenwandungen trifft.

Unebenheiten können besonders gut erkannt werden, wenn der Winkel zwischen Abstrahlrichtungen, mit welchen ein bestimmter Punkt der Innenwandungen beleuchtet wird, und Empfangsrichtungen, aus denen von demselben Punkt ausgehendes Licht von der Kameraeinrichtung gemessen wird, nah an 90° liegt.

So liegt der Winkel zwischen den Abstrahlrichtungen der Streiflichtbeleuchtungseinrichtung und den Empfangsrichtungen der Kameraeinrichtung zwischen 45° und 135°, insbesondere zwischen 60° und 120°, vorzugsweise zwischen 75° und 105°.

Weiterhin ist für einen großen Schattenwurf die Beleuchtungsrichtung relativ zur Längsrichtung des untersuchten Hohlraums entscheidend. Diese Richtungen können vorzugsweise beinah parallel zueinander stehen. Beispielsweise kann vorgesehen sein, dass von der Streiflichtbeleuchtungseinrichtung auf die Innenwandungen gestrahltes Licht auf diese in einem Winkel trifft, der kleiner ist als 25°, vorzugsweise kleiner als 15° oder 10°.

Unter dem Begriff Innenwandungen können die inneren Mantelflächen eines Hohlraums eines zu prüfenden Hohlkörpers verstanden werden. Der Hohlraum kann grundsätzlich an beiden gegenüberliegenden Stirnseiten geöffnet oder bloß an einer dieser Seiten geöffnet sein.

Der Hohlkörper kann ein grundsätzlich beliebiges Werkstück sein, das mindestens eine Vertiefung oder einen Durchbruch als Hohlraum aufweist. Es kann sich hierbei beispielsweise um einen Motorblock handeln, in dem mehrere Zylinderbohrungen als zu prüfende Hohlräume erzeugt wurden.

Die Halteeinrichtung kann prinzipiell in beliebiger Weise ausgeführt sein, solange sie den zu prüfenden Hohlkörper halten, das heißt tragen, kann. Gleichzeitig kann sie auch zum Transportieren des Hohlkörpers eingerichtet sein. Die Halteeinrichtung kann so gestaltet sein, dass ein gehaltener Hohlkörper eine definierte Position relativ zu übrigen Komponenten der Prüfvorrichtung einnimmt, etwa relativ zur Kameraeinrichtung. Alternativ kann aber auch die Halteeinrichtung so gestaltet sein, dass ein Hohlkörper verschiedene Positionen an der Halteeinrichtung einnehmen kann, wie es beispielsweise bei einem Förderband als Halteeinrichtung der Fall ist. Damit auch hier die Kameraeinrichtung entlang einer vorgegebenen Bewegungsbahn relativ zum Hohlkörper bewegt werden kann, können Positionserfassungsmittel vorhanden sein. Diese stellen die Position des Hohlkörpers an der Halteeinrichtung fest. Die Verstelleinrichtung zum Bewegen der Kameraeinrichtung wird sodann abhängig von der erfassten Position des Hohlkörpers gesteuert. Die Kameraeinrichtung selbst kann ebenfalls als Positionserfassungsmittel oder als Teil davon eingesetzt werden. Durch die Stabform der Kameraeinrichtung kann diese leicht in verschieden geformte Hohlräume eingebracht werden. Als Stabform kann insbesondere eine Form angesehen werden, deren Länge deutlich größer als ihre Querschnittsabmessungen ist, beispielsweise mindestens 4 Mal oder mindestens 6 Mal so groß. Dabei müssen nicht sämtliche zur Bildaufnahme erforderlichen Mittel innerhalb der Stabform angeordnet sein. Beispielsweise kann über optische Elemente innerhalb der Stabform eine Abbildung auf einem Kamerachip erzeugt werden, welcher sich außerhalb des stabförmigen Bereichs befindet.

Einen Lichteintrittsbereich, durch den Licht zum Aufnehmen eines Bilds der Innenwandungen in die Kameraeinrichtung eintreten kann, umfasst die stabförmige Kameraeinrichtung, insbesondere ausschließlich, an ihrem unteren Ende, das heißt an demjenigen Ende, mit welchem sie zuerst in den Hohlraum eingefahren wird. Der Lichteintrittsbereich kann sich zur Abbildung eines Rundumbilds über den vollständigen Umfang (360°) der Stabform erstrecken.

Die Kameraeinrichtung wird durch die Verstelleinrichtung relativ zum Hohlkörper verfahren. Dabei kann vorgesehen sein, dass die Kameraeinrichtung auch relativ zur Streiflichtbeleuchtungseinrichtung verfahren wird. Dies vereinfacht die Konstruktion der Streiflichtbeleuchtungseinrichtung, insbesondere hinsichtlich Größenbeschränkungen, und erleichtert eine präzise Bewegung der Kameraeinrichtung. Alternativ kann aber auch vorgesehen sein, dass die Streiflichtbeleuchtungseinrichtung starr mit der Kameraeinrichtung gekoppelt ist und somit gemeinsam mit dieser verstellt wird. Dies bietet unter anderem den Vorteil, dass für verschiedene Positionen der Kameraeinrichtung eine gleichmäßige Beleuchtung des von der Kameraeinrichtung jeweils aufgenommenen Bereichs erreicht wird.

Ein Verstellvorgang der Kameraeinrichtung durch die Verstelleinrichtung kann allgemein so aufgefasst werden, dass zumindest ihr Sichtbereich, das heißt ihr Erfassungsbereich, verstellt wird. So kann etwa ein äußerer Spiegel verschoben werden, während andere Komponenten der Kameraeinrichtung ortsfest bleiben, beispielsweise ein Kamerachip. Für eine erhöhte Sicherheit in einer raueren Fertigungsumgebung kann es aber bevorzugt sein, dass die optischen Komponenten in einem stabförmigen Gehäuse aufgenommen sind, welches von der Verstelleinrichtung bewegbar ist. In dem stabförmigen Gehäuse kann ein Überdruck aufgebaut sein und es können Mittel zur Luftspülung von Frontoptiken, durch die Licht in das Gehäuse ein- oder austreten kann, vorgesehen sein. Hierdurch kann ein Schutz gegenüber Staub verbessert werden. Es können auch sämtliche hier beschriebenen Mess- und Sendemittel der Prüfvorrichtung in einem klimatisierten und mit Überdruck beaufschlagten Messgehäuse angeordnet sein.

Die Kameraeinrichtung kann so gestaltet sein, dass sie ein Rundumbild zu einem Zeitpunkt aufnehmen kann. Alternativ kann aber auch vorgesehen sein, dass die Kameraeinrichtung von der Verstelleinrichtung gedreht wird und dabei nacheinander mehrere Bilder aufnimmt, welche von den elektronischen Steuer- und Auswertemitteln sodann zu einem einzigen Rundumbild zusammengesetzt werden.

Die Streiflichtbeleuchtungseinrichtung kann als ein Ringlicht gebildet sein, welches zentriert zur stabförmigen Kameraeinrichtung angeordnet ist. Dabei steht die Ringfläche senkrecht zur Längsrichtung der stabförmigen Kameraeinrichtung. Dies verbessert die Homogenität der Beleuchtung. Für eine Gestaltung als Ringlicht kann die Streiflichtbeleuchtungseinrichtung mehrere Lichtquellen umfassen, beispielsweise mindestens 4 oder 8 Lichtquellen, die entlang einer Ringform angeordnet sind.

Die Streiflichtbeleuchtungseinrichtung ist so angeordnet, dass sie sich außerhalb des Hohlkörpers befindet, wenn die Kameraeinrichtung in den Hohlkörper eingefahren ist. Beim Einfahren der Kameraeinrichtung kann die Streiflichtbeleuchtungseinrichtung mitbewegt werden oder ruhen. Durch die Positionierung außerhalb des Hohlkörpers kann eine Beleuchtung der Innenwandungen aus einer Richtung, die beinah parallel zur Längsrichtung des Hohlraums steht, erreicht werden, ohne dass eine Kollision mit dem Hohlkörper droht.

Die Steuer- und Auswertemittel können auch dazu gestaltet sein, aus den Messdaten der Durchmesserermittlungseinrichtung ein Höhenprofil oder eine Rauheit der Innenwandungen zu ermitteln.

Die Durchmesserermittlungseinrichtung kann insbesondere durch mindestens einen Triangulationssensor gebildet sein. Sie kann auch mehrere Triangulationssensoren umfassen, beispielsweise mindestens vier, welche insbesondere ringförmig um die stabförmige Kameraeinrichtung herum angeordnet sein können.

Ein Triangulationssensor kann beispielsweise getrennte Sende- und Empfangsoptiken aufweisen, wobei Licht, das aus einem über die Sendeoptik beleuchteten Bereich kommt, durch die Empfangsoptik abhängig vom Abstand des Bereichs zum Triangulationssensor auf verschiedene lichtempfindliche Sensoren oder Sensorbereiche geleitet wird.

Der mindestens eine Triangulationssensor kann so ausgerichtet sein, dass er einen Bereich der Innenwandungen prüft, welcher gleichzeitig auch von der Kameraeinrichtung untersucht wird.

Oftmals werden Werkstücke mit mehreren Hohlräumen geprüft. In einem solchen Fall können die Kameraeinrichtung und die Durchmesserermittlungseinrichtung auch gleichzeitig verschiedene Hohlräume prüfen. Dadurch sind Anforderungen an eine kompakte Bauweise geringer und gleichwohl kann die Überprüfung in kurzer Zeit erfolgen. Bei dieser Ausführung haben die Kameraeinrichtung und die Durchmesserermittlungseinrichtung vorzugsweise einen verstellbaren Abstand zueinander, der auf den Abstand der Hohlräume im Hohlkörper zueinander abgestimmt werden kann.

Ist die Durchmesserermittlungseinrichtung relativ zur Kameraeinrichtung so angeordnet, dass beide zur selben Zeit in verschiedene Hohlräume einfahrbar sind, so kann die Durchmesserermittlungseinrichtung über zugehörige Antriebsmittel verfügen. Die Durchmesserermittlungseinrichtung kann so angeordnet sein, dass sie entlang der Längsachse des zu prüfenden Hohlraums eingefahren wird. Dies erhöht die Genauigkeit von Abstandsmessungen zu den Innenwandungen.

Die Durchmesserermittlungseinrichtung und die Kameraeinrichtung können alternativ aber auch so angeordnet sein, dass sie denselben Hohlraum gleichzeitig untersuchen.

Es kann bevorzugt sein, dass die Durchmesserermittlungseinrichtung starr an die Kameraeinrichtung gekoppelt ist. Somit werden beide über die Verstelleinrichtung relativ zum Hohlkörper höhenverstellt und können nacheinander verschiedene Höhenbereiche von diesem überprüfen.

Die Durchmesserermittlungseinrichtung ist vorzugsweise als ein Konfokalsensor gebildet. Bei diesem ist ein gemeinsames optisches Element vorgesehen zum Senden von Licht der Lichtquelle zu den Innenwandungen und zum Leiten von Licht von den Innenwandungen zum optischen Messmittel. Bei dem Konfokalsensor stimmt ein beleuchteter Fokalbereich gerade mit einem Messbereich überein, der scharf abgebildet wird.

Die Durchmesserermittlungseinrichtung kann einen Lichtwellenleiter umfassen, welcher ausgesendetes Licht und/oder nachzuweisendes Licht leitet. Dadurch können die Lichtquelle und die optischen Messmittel im Messbetrieb außerhalb des untersuchten Hohlraums positioniert sein. Der Lichtwellenleiter kann parallel zur Längsachse der stabförmigen Kameraeinrichtung verlaufen.

Es können Antriebsmittel zum Drehen der Durchmesserermittlungseinrichtung vorhanden sein. Dadurch können nacheinander verschiedene Bereiche der Innenwandungen untersucht werden. Die Antriebsmittel können auch Teil der Verstelleinrichtung sein und gemeinsam mit der Durchmesserermittlungseinrichtung auch die Kameraeinrichtung drehen.

Zusätzlich zur Kameraeinrichtung kann mindestens ein Farbsensor zum Bestimmen der Farbe von Innenwandungen eines Hohlkörpers vorgesehen sein. Die elektronischen Steuer- und Auswertemittel können dazu eingerichtet sein, durch den Farbsensor ermittelte Farben von Innenwandungen mit vorgegebenen Werten zu vergleichen und abhängig vom Vergleich eine Qualitätsaussage über die Innenwandungen auszugeben. Die vorgegebenen Werte können beispielsweise Farbtöne sein oder Toleranzwerte, um welche nacheinander gemessene Farben voneinander abweichen dürfen.

Die elektronischen Steuer- und Auswertemittel können dazu eingerichtet sein, auf Basis der aufgenommenen Messwerte, das heißt der Messdaten der Kameraeinrichtung und gegebenenfalls der Durchmesserermittlungseinrichtung und gegebenenfalls des Farbsensors, eine Entscheidung darüber zu treffen, ob ein geprüfter Hohlkörper eine ausreichende oder ungenügende Qualität aufweist. Vorzugsweise umfasst die Prüfvorrichtung auch eine Sortiereinrichtung. Diese kann dazu gestaltet sein, einen geprüften Hohlkörper wahlweise auf einen von mindestens zwei verschiedenen Wegen weiter zu transportieren. Dabei wird ein Weg abhängig davon ausgewählt, ob eine ausreichende oder ungenügende Qualität des Hohlkörpers festgestellt wurde.

Der Farbsensor kann mit der Durchmesserermittlungseinrichtung starr gekoppelt sein und somit gemeinsam mit dieser in der Höhe verstellt und gedreht werden. Die Drehachse liegt in diesem Fall vorzugsweise mittig zum momentan geprüften Hohlraum. Die Durchmesserermittlungseinrichtung kann so angeordnet sein, dass sie zentral oder dezentral in einen gehaltenen Hohlkörper eingefahren wird.

Eine Farbunterscheidung des Farbsensors kann zweckmäßigerweise besser sein als die der Kameraeinrichtung.

An der stabförmigen Kameraeinrichtung können mitfahrende Beleuchtungsmittel vorgesehen und so angeordnet sein, dass sie den von der Kameraeinrichtung erfassten Bereich von Innenwandungen beleuchten. Die Beleuchtungsmittel können Teil der Beleuchtungseinrichtung sein. Es kann vorgesehen sein, diese und die Streiflichtbeleuchtungseinrichtung nacheinander einzuschalten , wobei die Kameraeinrichtung jeweils mindestens ein Bild aufnehmen kann. Während die Streiflichtbeleuchtungseinrichtung aufgrund ihrer Anordnung Unebenheiten der Innenwandungen besonders stark zur Geltung bringt, können die Beleuchtungsmittel vorzugsweise eine besonders homogene Ausleuchtung bewerkstelligen. Zudem können die Streiflichtbeleuchtungseinrichtung und die Beleuchtungsmittel in unterschiedlichen Wellenlängenbereichen Licht abstrahlen, wodurch verschiedene Informationen über die Innenwandungen gewonnen werden können. Für eine homogene Ausleuchtung können Abstrahlrichtungen der Beleuchtungsmittel in kleinem Winkel zu Empfangsrichtungen der Kameraeinrichtung stehen, etwa in Winkeln kleiner 30° oder kleiner 15°.

Um die zur Prüfung erforderliche Zeit weiter zu reduzieren, kann die stabförmige Kameraeinrichtung mehrere in ihrer Längsrichtung versetzte Lichteintrittsbereiche zur Aufnahme mehrerer in Längsrichtung versetzter Rundumbilder aufweisen. Zu jedem dieser Lichteintrittsbereiche kann eine zugehörige Kamera, das heißt ein Kamerachip, vorhanden sein.

Die erfindungsgemäße Prüfvorrichtung kann auch über mehrere Kameraeinrichtungen und mehrere Durchmesserermittlungseinrichtungen verfügen. Diese können durch eine gemeinsame Verstelleinrichtung verfahren werden oder zumindest gleichzeitig angesteuert werden. Dadurch können mehrere Hohlräume eines Hohlkörpers gleichzeitig untersucht werden. Dies ist beispielsweise für Zylinder eines Verbrennungsmotors nützlich. Die mehreren Kameraeinrichtungen und mehreren Durchmesserermittlungseinrichtungen können in einem einstellbaren Abstand zueinander angeordnet sein, so dass dieser Abstand an den Abstand zwischen den zu untersuchenden Hohlräumen angepasst werden kann.

Bei einer Variante des erfindungsgemäßen Verfahrens werden zum Prüfen verschiedener Höhenbereiche der Innenwandungen mit der stabförmigen Kameraeinrichtung mehrere Bilder nacheinander aufgenommen, während diese von der Verstelleinrichtung in den Hohlkörper ein- und/oder aus diesem herausgefahren wird. Hierdurch kann in kurzer Zeit der gesamte zu untersuchende Höhenbereich der Innenwandungen aufgezeichnet werden. Sofern Bilder bloß entweder beim Ein- oder beim Ausfahren aufgenommen werden, kann die Ein- oder Ausfahrbewegung, während der keine Bildaufnahme erfolgt, besonders schnell ausgeführt werden, das heißt jedenfalls schneller als die andere der Ein- oder Ausfahrbewegung. Alternativ können Bilder auch sowohl während dem Ein- als auch Ausfahren aufgenommen werden, wodurch eine Datenredundanz und/oder größere Messsicherheit erreicht werden kann.

Die Verstelleinrichtung kann so angesteuert werden, dass sie die Kameraeinrichtung entlang einer Mittelachse eines Hohlraums des Hohlkörpers in diesen einfährt. Durch die Bewegung entlang der Mittelachse wird die folgende Datenauswertung vereinfacht. Für eine Führung entlang der Mittelachse können die Kameraeinrichtung und die Halteeinrichtung für den Hohlkörper entsprechend zueinander angeordnet sein.

Es kann vorteilhaft sein, wenn mit dem Farbsensor und der Durchmesserermittlungseinrichtung Hohlräume mit sehr unterschiedlichen Durchmessern präzise untersucht werden können. Zu diesem Zweck können die Antriebsmittel dazu eingerichtet sein, den Farbsensor und/oder die Durchmesserermittlungseinrichtung quer, insbesondere senkrecht, zu einer Längsachse des Hohlraums zu verfahren. Diese Verstellung kann automatisch nach einer Messung des Abstands vom Farbsensor und/oder der Durchmesserermittlungseinrichtung zu einer Wand des Hohlraums erfolgen. Die Messung des Abstands kann dabei mit der Durchmesserermittlungseinrichtung durchgeführt werden. Vorteilhafterweise können dadurch mit ein und derselben Prüfvorrichtung Hohlräume sehr verschiedener Größen geprüft werden.

Für eine mechanisch einfache Konfiguration kann es vorgesehen sein, dass die Kameraeinrichtung und der Farbsensor und/oder die Durchmesserermittlungseinrichtung nacheinander in denselben zu überprüfenden Hohlraum eingefahren werden. Die Kameraeinrichtung und der Farbsensor oder die Durchmesserermittlungseinrichtung können in einer Ebene senkrecht zur Längsachse des Hohlraums versetzt zueinander angeordnet sein, beispielsweise um 180° um die Längsachse gedreht.

Die als zusätzliche Vorrichtungsmerkmale beschriebenen Eigenschaften der Erfindung sind auch als Varianten des erfindungsgemäßen Verfahrens aufzufassen, und umgekehrt.

Weitere Vorteile und Merkmale der Erfindung werden nachstehend mit Bezug auf die beigefügten schematischen Figuren beschrieben. Hierin zeigen:
- Fig. 1: eine schematische Darstellung eines ersten Ausführungsbeispiels einer erfindungsgemäßen Prüfvorrichtung;
- Fig. 2: eine schematische Darstellung eines zweiten Ausführungsbeispiels einer erfindungsgemäßen Prüfvorrichtung und
- Fig. 3: eine schematische Darstellung eines dritten Ausführungsbeispiels einer erfindungsgemäßen Prüfvorrichtung.

Gleiche und gleich wirkende Bestandteile sind in den Figuren in der Regel mit denselben Bezugszeichen gekennzeichnet.

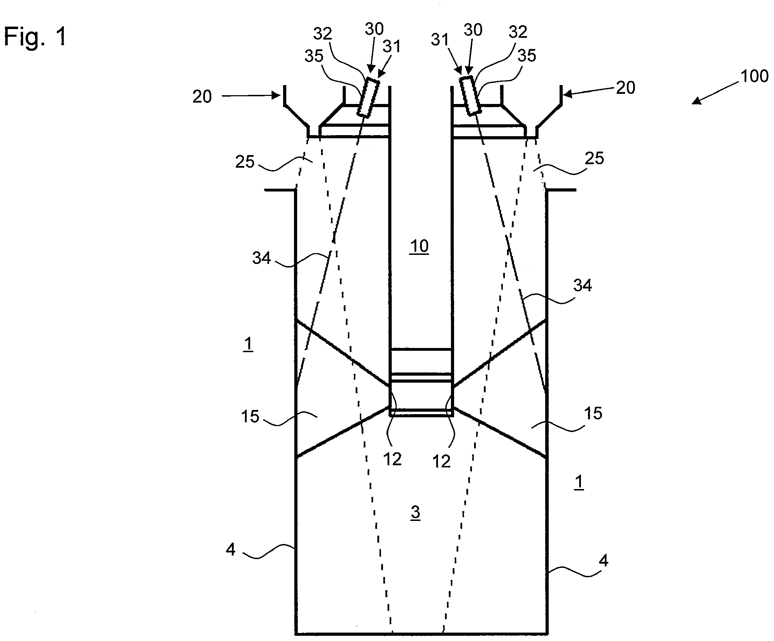

Fig. 1 zeigt ein Ausführungsbeispiel einer erfindungsgemäßen Prüfvorrichtung 100. Diese dient der Untersuchung von Innenwandungen 4 eines Hohlkörpers 1. Beispielsweise kann es sich um Zylinderlaufflächen 4 eines Motorblocks 1 handeln.

Der Hohlkörper 1 kann eine oder mehrere Hohlräume 3 aufweisen, welche jeweils zu überprüfende Innenwandungen 4 aufweisen. Beispielsweise können Beschichtungen der Innenwandungen 4 zu prüfen sein.

Als wesentliche Komponenten umfasst die Prüfvorrichtung 100 eine Kameraeinrichtung 10, eine Streiflichtbeleuchtungseinrichtung 20 und eine Durchmesserermittlungseinrichtung 30.

Zudem weist die Prüfvorrichtung 100 eine hier nicht dargestellte Halteeinrichtung auf, mit welcher der Hohlkörper 1 an einer gewünschten und bekannten Position gehalten wird.

Die Kameraeinrichtung 10 hat ein stabförmiges Gehäuse. Dieses wird von einer Verstelleinrichtung (nicht dargestellt) in den Hohlraum 3 eingefahren. Über einen Lichteintrittsbereich 12 am unteren Ende des stabförmigen Gehäuses kann die Kameraeinrichtung 10 ein Bild der Umgebung aufnehmen. Der Sichtbereich 15 der Kameraeinrichtung 10 liegt quer, insbesondere senkrecht zu ihrer Längsrichtung, die durch die Stabform definiert ist. Vorzugsweise deckt der Sichtbereich einen 360°-Winkel ab, so dass ein Rundumbild aufgenommen werden kann.

Die Streiflichtbeleuchtungseinrichtung 20 dient der Beleuchtung der Innenwandungen 4. Dabei ist die Streiflichtbeleuchtungseinrichtung 20 so angeordnet, dass ihre Abstrahlrichtungen 25 quer zu Empfangsrichtungen 15, das heißt dem Sichtbereich 15, der Kameraeinrichtung 10 stehen. Dies kann auch als Dunkelfeldbeleuchtung bezeichnet werden. Hierdurch werfen Unebenheiten der Innenwandungen 4 verhältnismäßig stark Schatten, welche sodann von der Kameraeinrichtung 10 festgestellt werden können.

Die Streiflichtbeleuchtungseinrichtung 20 kann eine ringförmige Beleuchtung bereitstellen, welche einen vollständigen Ringbereich der Innenwandungen 4 gleichzeitig beleuchtet.

Die Kameraeinrichtung 10 kann mehrere Bilder aufnehmen, während sie in den Hohlraum 3 hinein- oder aus diesem herausgefahren wird. Dadurch können verschiedene Höhenbereiche der Innenwandungen 4 untersucht werden.

Die aufgenommenen Bilder werden sodann von elektronischen Steuer- und Auswertemitteln (nicht dargestellt) ausgewertet. Mit Hilfe vorgegebener Kriterien treffen die Steuer- und Auswertemittel eine Entscheidung, ob die untersuchten Innenwandungen 4 fehlerfrei oder fehlerbehaftet sind. Abhängig von dieser Entscheidung kann der Hohlkörper 1 zu verschiedenen Fertigungsstationen weitertransportiert werden.

Als eine wesentliche Idee der Erfindung wird mit einer weiteren optischen Messeinrichtung der Durchmesser des Hohlraums 3 erfasst. Aus dem Durchmesser kann auch auf eine Beschichtungsdicke der Innenwandungen 4 oder auf Unregelmäßigkeiten einer Beschichtung geschlossen werden. Diese Messungen erfolgen mit der Durchmesserermittlungseinrichtung 30, welche mindestens eine Lichtquelle 32 und optische Messmittel 35 aufweist.

Im dargestellten Beispiel umfasst diese mehrere Triangulationssensoren 31, welche so angeordnet sind, dass sie bei in den Hohlraum 3 eingefahrener Kameraeinrichtung 10 auf verschiedene Stellen der Innenwandungen 4 gerichtet sind. Die Triangulationssensoren 31 können gemeinsam mit der Kameraeinrichtung 10 bewegbar sein. Dadurch können verschiedene Höhenbereiche der Innenwandungen 4 auch durch die Triangulationssensoren 31 geprüft werden.

Messergebnisse der Durchmesserermittlungseinrichtung 30 werden von den Steuer- und Auswertemitteln ebenfalls berücksichtigt, um die Entscheidung hinsichtlich fehlerfreier oder fehlerbehafteter Innenwandungen 4 zu treffen.

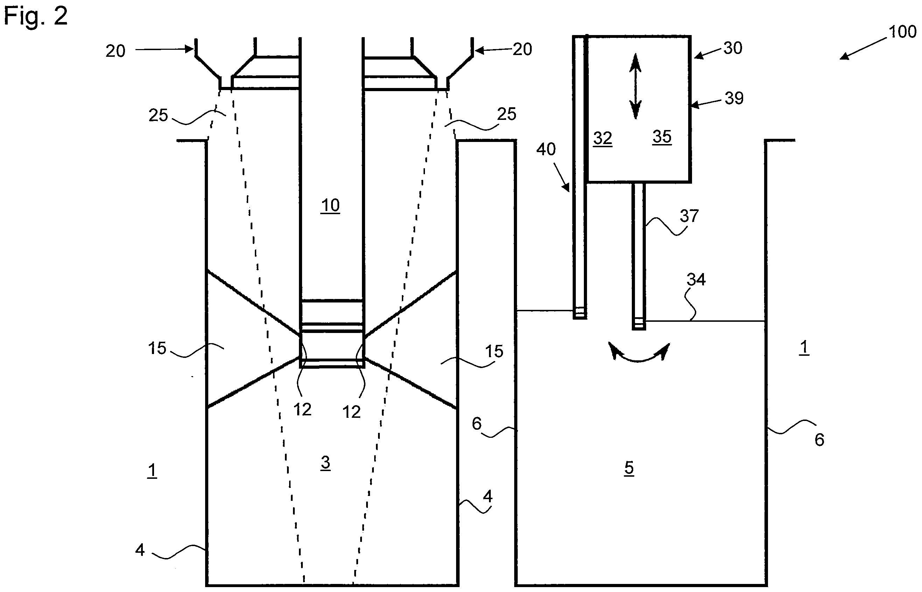

Bei der Ausführungsform der Fig. 2 wird ein Hohlkörper 1 untersucht, welcher mehrere Hohlräume 3 und 5 aufweist, die jeweils über zu prüfende Innenwandungen 4 und 6 verfügen. Hier umfasst die Prüfvorrichtung 100 wiederum eine Kameraeinrichtung 10, eine Streiflichtbeleuchtungseinrichtung 20 und eine Durchmesserermittlungseinrichtung 30.

Die Durchmesserermittlungseinrichtung 30 ist hier aber nicht durch Triangulationssensoren gebildet. Vielmehr wird ein optischer Abstandsmesser 30 verwendet, der vorzugsweise als Konfokalsensor 39 ausgeführt ist. Er umfasst einen Wellenleiter 37, über den ein Messstrahl 34 auf die Innenwandungen 6 geleitet wird. Zurückgeworfenes Licht wird ebenfalls über den Wellenleiter 37 geleitet.

Weiterhin ist hier ein Farbsensor 40 vorhanden, welcher eine farbsensitive Messung der Innenwandungen 6 durchführt. Der Farbsensor 40 kann ebenfalls über einen Wellenleiter verfügen und kann an den Abstandsmesser 30 gekoppelt sein. Dadurch können beide gleichzeitig in den Hohlraum 5 eingefahren werden. Zudem können beide gemeinsam um die Mittelachse des Hohlraums 5 gedreht werden, womit die Innenwandungen 6 in Umfangsrichtung gescannt werden können. Die Bestimmung der Farbe kann dabei helfen, Fehlstellen und/oder Schichtdicken an den Innenwandungen zu erfassen.

Bei der Ausführungsform von Fig. 2 werden die Durchmesserermittlungseinrichtung 30 und die Kameraeinrichtung 10 gleichzeitig in verschiedene Hohlräume 3 und 5 eingebracht. Dadurch stören sich diese Komponenten auch dann nicht, wenn ihre Abmessungen größer sind. Zudem können beide entlang einer Mittelachse des jeweiligen Hohlraums 3, 5 eingefahren werden, was die Auswertung der Messungen erleichtert.

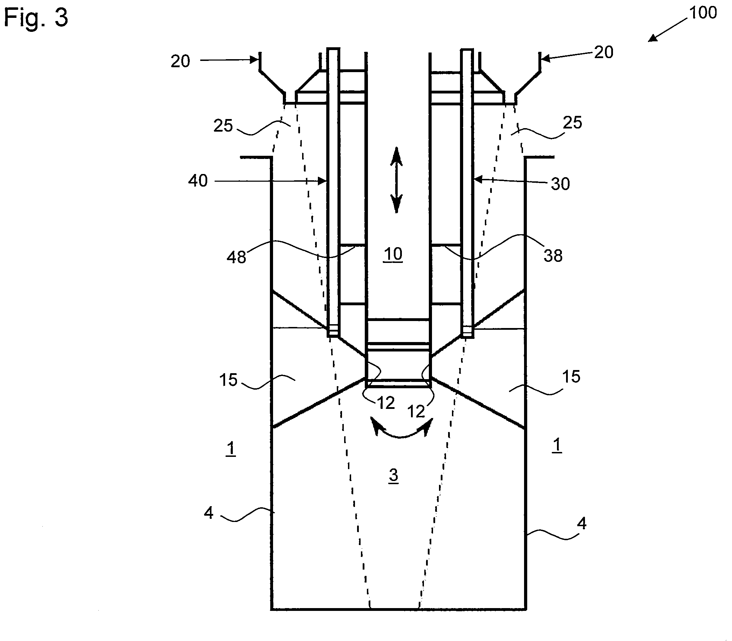

Bei der Ausführung von Fig. 3 umfasst die Prüfvorrichtung 100 eine Kameraeinrichtung 10 und eine Streiflichtbeleuchtungseinrichtung 20, welche wie zu den Figuren 1 oder 2 beschrieben gestaltet sein können. Die Durchmesserermittlungseinrichtung 30 und der Farbsensor 40 sind hier wie bei der Ausführung von Fig. 2 aufgebaut. Jedoch sind sie bei der Ausführung von Fig. 3 mit der Kameraeinrichtung 10 gekoppelt. Sie werden also gemeinsam mit dieser in denselben Hohlraum 3 eingefahren. Hierbei kann die Durchmesserermittlungseinrichtung 30 außerhalb des Sichtbereichs 15 der Kameraeinrichtung 10 angeordnet sein, so dass sich die Messungen nicht gegenseitig stören. Die Streiflichtbeleuchtungseinrichtung 20 und die Lichtquelle der Durchmesserermittlungseinrichtung 30 können hier nacheinander angesteuert werden, womit wiederum gegenseitige Störungen vermieden werden.

Durch eine Drehung der Messkomponenten 10, 30, 40 und gegebenenfalls der Streiflichtbeleuchtungseinrichtung 20 können nacheinander verschiedene Umfangsabschnitte der Innenwandungen 4 untersucht werden. Weil für die Messkomponenten 30, 40 eine Drehung ohnehin erforderlich ist, ist eine Gestaltung der Kameraeinrichtung 10 zur Aufnahme eines Rundumbilds hier nicht zwingend erforderlich. Stattdessen können auch nacheinander an gleicher Höhe aufgenommene Bilder der Kameraeinrichtung 10 zu einem Rundumbild zusammengesetzt werden.

Durch die erfindungsgemäße Prüfvorrichtung 100 können Hohlkörper vorteilhafterweise besonders schnell und zuverlässig untersucht werden. Dabei können fehlerbehaftete Hohlkörper aussortiert werden, ohne dass es einem Zutun eines Benutzers bedarf.

## Patentansprüche

1. Prüfvorrichtung zum Prüfen von Innenwandungen (4, 6) eines Hohlkörpers (1), insbesondere einer Zylinderbohrung in einem Motorblock, mit
- einer Halteeinrichtung zum Halten des Hohlkörpers (1),
- einer stabförmigen Kameraeinrichtung (10), welche dazu eingerichtet ist, ein Bild quer zu einer Längsachse der stabförmigen Kameraeinrichtung (10) aufzunehmen,
- einer Verstelleinrichtung zum Ein- und Ausfahren der Kameraeinrichtung (10) in den Hohlkörper (1),
- einer Beleuchtungseinrichtung (20) zum Beleuchten der Innenwandungen (4, 6) des Hohlkörpers (1),
- elektronischen Steuer- und Auswertemitteln, welche dazu eingerichtet sind, zum Aufnehmen eines Rundumbilds um die Längsachse der stabförmigen Kameraeinrichtung (10) die Kameraeinrichtung (10) anzusteuern und aus Bilddaten, die von der Kameraeinrichtung (10) aufgenommen werden, Oberflächeneigenschaften der Innenwandungen (4, 6) zu ermitteln, und
- einer Durchmesserermittlungseinrichtung (30) zum Ermitteln eines Innendurchmessers eines Hohlraums (3, 5) des Hohlkörpers (1),
wobei die Steuer- und Auswertemittel dazu eingerichtet sind, aus Messinformationen der Durchmesserermittlungseinrichtung (30) den Innendurchmesser des Hohlraums (3, 5) zu bestimmen,
**dadurch gekennzeichnet,**
- **dass** die Durchmesserermittlungseinrichtung (30) eine Lichtquelle (32), welche zusätzlich zur Beleuchtungseinrichtung (20) vorgesehen ist, zum Aussenden eines Lichtstrahls (34) auf Innenwandungen (4, 6) des Hohlraums (3, 5) sowie optische Messmittel (35), welche zusätzlich zur Kameraeinrichtung (10) vorgesehen sind, zum Nachweisen von Licht, welches von den Innenwandungen (4, 6) des Hohlraums (3, 5) kommt, aufweist,
- **dass** die Beleuchtungseinrichtung (20) eine Streiflichtbeleuchtungseinrichtung (20) umfasst, welche so angeordnet ist, dass Abstrahlrichtungen (25) der Streiflichtbeleuchtungseinrichtung (20), in welchen sie im Betrieb Innenwandungen (4, 6) beleuchtet, quer zu Empfangsrichtungen (15) stehen, aus welchen die Kameraeinrichtung (10) Licht von den beleuchteten Innenwandungen (4, 6) empfängt, wobei ein Winkel zwischen den Abstrahlrichtungen (25) und den Empfangsrichtungen (15) zwischen 45° und 135° liegt, und
- **dass** die Streiflichtbeleuchtungseinrichtung (20) so angeordnet ist, dass sie sich außerhalb des Hohlkörpers (1) befindet, wenn die Kameraeinrichtung (10) in den Hohlkörper (1) eingefahren ist.

2. Prüfvorrichtung nach Anspruch 1,
**dadurch gekennzeichnet,**
**dass** von der Streiflichtbeleuchtungseinrichtung (20) auf die Innenwandungen (4, 6) gestrahltes Licht auf diese in einem Winkel gestrahlt wird, der kleiner ist als 25°, vorzugsweise kleiner als 10°.

3. Prüfvorrichtung nach Anspruch 1 oder 2,
**dadurch gekennzeichnet,**
**dass** die stabförmige Kameraeinrichtung (10) an ihrem unteren Ende, mit welchem sie zuerst in einen Hohlraum (3, 5) des Hohlkörpers (1) eingefahren wird, einen Lichteintrittsbereich (12) aufweist, durch den Licht zum Aufnehmen eines Bilds der Innenwandungen (4, 6) eintreten kann.

4. Prüfvorrichtung nach einem der Ansprüche 1 bis 3,
**dadurch gekennzeichnet,**
**dass** die Beleuchtungseinrichtung (20) als ein Ringlicht gebildet ist, welches zentriert zur stabförmigen Kameraeinrichtung (10) angeordnet ist.

5. Prüfvorrichtung nach einem der Ansprüche 1 bis 4,
**dadurch gekennzeichnet,**
**dass** die Durchmesserermittlungseinrichtung (30) mindestens einen Triangulationssensor (31) umfasst.

6. Prüfvorrichtung nach einem der Ansprüche 1 bis 5,
**dadurch gekennzeichnet,**
**dass** die Durchmesserermittlungseinrichtung (30) einen Konfokalsensor (39) umfasst, wobei ein gemeinsames optisches Element vorgesehen ist zum Senden von Licht der Lichtquelle (32) zu den Innenwandungen (4, 6) und zum Leiten von Licht von den Innenwandungen (4, 6) zu den optischen Messmitteln (35).

7. Prüfvorrichtung nach einem der Ansprüche 1 bis 6,
**dadurch gekennzeichnet,**
**dass** die Durchmesserermittlungseinrichtung (30) relativ zur Kameraeinrichtung (10) so angeordnet ist, dass beide zur selben Zeit in verschiedene Hohlräume (3, 5) einfahrbar sind.

8. Prüfvorrichtung nach einem der Ansprüche 1 bis 7,
**dadurch gekennzeichnet,**
**dass** zusätzlich ein Farbsensor (40) zum Bestimmen der Farbe von Innenwandungen (4, 6) eines Hohlkörpers (1) vorgesehen ist und
**dass** die elektronischen Steuer- und Auswertemittel dazu eingerichtet sind, ermittelte Farben von Innenwandungen (4, 6) mit vorgegebenen Werten zu vergleichen und abhängig vom Vergleich eine Qualitätsaussage über die Innenwandungen (4, 6) auszugeben.

9. Prüfvorrichtung nach einem der Ansprüche 1 bis 8,
**dadurch gekennzeichnet,**
**dass** die Beleuchtungseinrichtung (20) an der stabförmigen Kameraeinrichtung (10) mitfahrende Beleuchtungsmittel umfasst, welche so angeordnet sind, dass sie den von der Kameraeinrichtung (10) im Betrieb erfassten Bereich von Innenwandungen (4, 6) beleuchten.

10. Prüfvorrichtung nach einem der Ansprüche 1 bis 9,
**dadurch gekennzeichnet,**
**dass** die elektronischen Steuer- und Auswertemittel dazu eingerichtet sind, auf Basis aufgenommener Messwerte eine Entscheidung darüber zu treffen, ob ein geprüfter Hohlkörper (1) eine ausreichende oder ungenügende Qualität aufweist, und
**dass** eine Sortiereinrichtung vorhanden ist, welche den geprüften Hohlkörper (1) nach dem Kriterium sortiert, ob eine ausreichende oder ungenügende Qualität des Hohlkörpers (1) festgestellt wurde.

11. Verfahren zum Prüfen von Innenwandungen (4, 6) eines Hohlkörpers (1) durch die Prüfvorrichtung nach einem der Ansprüche 1 bis 10,
**dadurch gekennzeichnet,**
**dass** zum Prüfen der Innenwandungen (4, 6) mit der stabförmigen Kameraeinrichtung (10) mindestens ein Bild aufgenommen wird, während die Kameraeinrichtung (10) von der Verstelleinrichtung in den Hohlkörper (1) eingefahren ist, dass die Streiflichtbeleuchtungseinrichtung (20) sich außerhalb des Hohlkörpers (1) befindet, wenn die Kameraeinrichtung (10) in den Hohlkörper (1) eingefahren ist, und
**dass** die Lichtquelle (32) einen Lichtstrahl (34) auf Innenwandungen (4, 6) des Hohlraums (3, 5) aussendet und die optischen Messmittel (35) Licht nachweisen, welches von den Innenwandungen (4, 6) des Hohlraums (3, 5) kommt.

12. Verfahren nach Anspruch 11,
**dadurch gekennzeichnet,**
**dass** die Kameraeinrichtung (10) entlang einer Mittelachse eines Hohlraums (3, 5) des Hohlkörpers (1) in diesen eingefahren wird.

## Claims

1. Examining device for examining inner walls (4, 6) of a hollow body (1), in particular a cylinder bore in an engine block, having
- a holding means for holding the hollow body (1),
- a rod-shaped camera device (10) which is designed to record an image transversely with respect to a longitudinal axis of the rod-shaped camera device (10),
- an adjustment means for moving the camera device (10) into and out of the hollow body (1),
- an illumination means (20) for illuminating the inner walls (4, 6) of the hollow body (1),
- electronic control and evaluation means which are designed to control the camera device (10) for recording a panoramic image around the longitudinal axis of the rod-shaped camera device (10), and to determine from image data recorded by the camera device (10) surface properties of the inner walls (4, 6), and
- a diameter determination means (30) for determining an inner diameter of a cavity (3, 5) of the hollow body (1),
wherein the control and evaluation means are designed to determine the inner diameter of the cavity (3, 5) from measurement information of the diameter determination means (30),
**characterised in that**
- the diameter determination means (30) has a light source (32) which is provided in addition to the illumination device (20) to emit a light beam (34) onto inner walls (4, 6) of the cavity (3, 5), and also has optical measuring means (35) which are provided in addition to the camera device (10) to detect light coming from the inner walls (4, 6) of the cavity (3, 5),
- that the illumination device (20) comprises a grazing light illumination device (20) which is arranged so that emission directions (25) of the grazing light illumination device (20), in which it illuminates inner walls (4, 6) during operation, are transverse with respect to receiving directions (15), from which the camera device (10) receives light from the illuminated inner walls (4, 6), wherein an angle between the emission directions (25) and the receiving directions (15) is between 45° and 135° and
- that the grazing light illumination device (20) is arranged so that it is located outside of the hollow body (1) when the camera device (10) has been moved into the hollow body (1).

2. Examining device according to claim 1,
**characterised in that**
light emitted by the grazing light illumination device (20) onto the inner walls (4, 6) is guided onto them at an angle which is smaller than 25°, preferably smaller than 10°.

3. Examining device according to claim 1 or 2,
**characterised in that**
the rod-shaped camera device (10) has a light entry area (12) at its lower end, with which it is first moved into a cavity (3, 5) of the hollow body (1), through which light entry area light can enter to record an image of the inner walls (4, 6).

4. Examining device according to one of claims 1 to 3,
**characterised in that**
the illumination device (20) is formed as a ring light which is arranged centred relative to the rod-shaped camera device (10).

5. Examining device according to one of claims 1 to 4,
**characterised in that**
the diameter determination means (30) comprises at least one triangulation sensor (31).

6. Examining device according to one of claims 1 to 5,
**characterised in that**
the diameter determination means (30) comprises a confocal sensor (39), wherein a shared optical element is provided for emitting light of the light source (32) to the inner walls (4, 6) and for guiding light from the inner walls (4, 6) to the optical measurement means (35).

7. Examining device according to one of claims 1 to 6,
**characterised in that**
the diameter determination means (30) is arranged relative to the camera device (10) so that both can be moved at the same time into different cavities (3, 5).

8. Examining device according to one of claims 1 to 7,
**characterised in that**
additionally a colour sensor (40) is provided for determining the colour of inner walls (4, 6) of a hollow body (1) and
that the electronic control and evaluation means are designed to compare detected colours of inner walls (4, 6) with predefined values and to output a quality information about the inner walls (4, 6) in dependence upon the comparison.

9. Examining device according to one of claims 1 to 8,
**characterised in that**
the illumination device (20) comprises illumination means moving with on the rod-shaped camera device (10), which are arranged so that they illuminate the area of inner walls (4, 6) detected by the camera device (10) during operation.

10. Examining device according to one of claims 1 to 9,
**characterised in that**
the electronic control and evaluation means are designed for that purpose, on the basis of recorded measurement values, to reach a decision above that whether an examined hollow body (1) has a sufficient or insufficient quality, and
that a sorting means is present which sorts the examined hollow body (1) according to the criterion of whether a sufficient or insufficient quality of the hollow body (1) has been determined.

11. Method for examining inner walls (4, 6) of a hollow body (1) by the examining device according to one of claims 1 to 10,
**characterised in that**
for examining the inner walls (4, 6) with the rod-shaped camera device (10), at least one image is recorded while the camera device (10) has been moved by the adjustment means into the hollow body (1),
that the grazing light illumination device (20) is located outside of the hollow body (1) when the camera device (10) has been moved into the hollow body (1) and that the light source (32) emits a light beam (34) onto inner walls (4, 6) of the cavity (3, 5) and the optical measurement means (35) detect light coming from the inner walls (4, 6) of the cavity (3, 5).

12. Method according to claim 11,
**characterised in that**
the camera device (10) is moved along a middle axis of a cavity (3, 5) of the hollow body (1) into this hollow body (1).

## Revendications

1. Dispositif de contrôle pour le contrôle de parois intérieures (4, 6) d'un corps creux (1), en particulier d'un alésage de cylindre dans un bloc moteur, avec
- un dispositif de maintien pour le maintien du corps creux (1),
- un dispositif de caméra (10) en forme de barre qui est aménagé afin de prendre une image transversalement à un axe longitudinal du dispositif de caméra (10) en forme de barre,
- un dispositif de réglage pour rentrer et sortir le dispositif de caméra (10) dans le corps creux (1),
- un dispositif d'éclairage (20) pour l'éclairage des parois intérieures (4, 6) du corps creux (1),
- des moyens de commande et de détermination électroniques qui sont aménagés afin de commander, pour la prise d'une image périphérique autour de l'axe longitudinal du dispositif de caméra (10) en forme de barre, le dispositif de caméra (10) et de déterminer, à partir de données d'image qui sont prises par le dispositif de caméra (10), des propriétés de surface des parois intérieures (4, 6), et
- un dispositif d'évaluation de diamètre (30) pour la détermination d'un diamètre intérieur d'un espace creux (3, 5) du corps creux (1),
dans lequel les moyens de commande et de détermination sont aménagés afin de déterminer à partir d'informations de mesure du dispositif d'évaluation de diamètre (30), le diamètre intérieur de l'espace creux (3, 5),
**caractérisé en ce**
- **que** le dispositif d'évaluation de diamètre (30) présente une source de lumière (32) qui est prévue en plus du dispositif d'éclairage (20) pour émettre un faisceau lumineux (34) sur des parois intérieures (4, 6) de l'espace creux (3, 5) ainsi que des moyens de mesure optiques (35) qui sont prévus en plus du dispositif de caméra (10) pour détecter de la lumière provenant des parois intérieures (4, 6) de l'espace creux (3, 5),
- **que** le dispositif d'éclairage (20) comprend un dispositif d'éclairage de lumière rasante (20) qui est disposé de sorte que des directions de rayonnement (25) du dispositif d'éclairage de lumière rasante (20), dans lesquels il éclaire en fonctionnement des parois intérieures (4, 6), soient transversales aux directions de réception (15), à partir desquelles le dispositif de caméra (10) reçoit de la lumière des parois intérieures (4, 6) éclairées, dans lequel un angle entre les directions de rayonnement (25) et les directions de réception (15) est compris entre 45° et 135°, et
- **que** le dispositif d'éclairage de lumière rasante (20) est disposé de sorte qu'il se trouve en dehors du corps creux (1), lorsque le dispositif de caméra (10) est rentré dans le corps creux (1).

2. Dispositif de contrôle selon la revendication 1,
**caractérisé en ce**
**que** de la lumière émise par le dispositif d'éclairage de lumière rasante (20) sur les parois intérieures (4, 6) est rayonnée sur celles-ci selon un angle qui est inférieur à 25°, de préférence inférieur à 10°.

3. Dispositif de contrôle selon la revendication 1 ou 2,
**caractérisé en ce**
**que** le dispositif de caméra (10) en forme de barre présente, à son extrémité inférieure avec laquelle il est rentré en premier dans un espace creux (3, 5) du corps creux (1), une zone d'entrée de lumière (12) au travers de laquelle de la lumière peut rentrer pour la prise d'une image des parois intérieures (4, 6).

4. Dispositif de contrôle selon l'une quelconque des revendications 1 à 3,
**caractérisé en ce**
**que** le dispositif d'éclairage (20) est formé en tant que lumière annulaire qui est disposée de manière centrée par rapport au dispositif de caméra (10) en forme de barre.

5. Dispositif de contrôle selon l'une quelconque des revendications 1 à 4,
**caractérisé en ce**
**que** le dispositif d'évaluation de diamètre (30) comprend au moins un capteur de triangulation (31).

6. Dispositif de contrôle selon l'une quelconque des revendications 1 à 5,
**caractérisé en ce**
**que** le dispositif d'évaluation de diamètre (30) comprend un capteur confocal (39), dans lequel un élément optique commun est prévu pour l'émission de lumière de la source de lumière (32) vers les parois intérieures (4, 6) et pour la conduite de lumière des parois intérieures (4, 6) aux moyens de mesure optiques (35).

7. Dispositif de contrôle selon l'une quelconque des revendications 1 à 6,
**caractérisé en ce**
**que** le dispositif d'évaluation de diamètre (30) est disposé par rapport au dispositif de caméra (10) de sorte que les deux puissent être rentrés en même temps dans différents espaces creux (3, 5).

8. Dispositif de contrôle selon l'une quelconque des revendications 1 à 7,
**caractérisé en ce**
**qu'**en outre, un capteur de couleur (40) est prévu pour la détermination de la couleur de parois intérieures (4, 6) d'un corps creux (1) et
**que** les moyens de commande et de détermination électroniques sont aménagés afin de comparer des couleurs déterminées de parois intérieures (4, 6) avec des valeurs prédéterminées et d'émettre en fonction de la comparaison une évaluation de qualité des parois intérieures (4, 6).

9. Dispositif de contrôle selon l'une quelconque des revendications 1 à 8,
**caractérisé en ce**
**que** le dispositif d'éclairage (20) comprend, au niveau du dispositif de caméra (10) en forme de barre, des moyens d'éclairage se déplaçant conjointement qui sont disposés de sorte qu'ils éclairent la zone détectée en fonctionnement par le dispositif de caméra (10) de parois intérieures (4, 6).

10. Dispositif de contrôle selon l'une quelconque des revendications 1 à 9,
**caractérisé en ce**
**que** les moyens de commande et de détermination électroniques sont aménagés afin de prendre une décision sur la base de valeurs de mesure relevées concernant le fait qu'un corps creux (1) contrôlé présente une qualité suffisante ou insuffisante, et
**qu'**un dispositif de tri est présent, lequel trie le corps creux (1) contrôlé selon le critère selon lequel une qualité suffisante ou insuffisante du corps creux (1) a été constatée.

11. Procédé de contrôle de parois intérieures (4, 6) d'un corps creux (1) par le dispositif de contrôle selon l'une quelconque des revendications 1 à 10,
**caractérisé en ce**
**que** pour le contrôle des parois intérieures (4, 6) avec le dispositif de caméra (10) en forme de barre, au moins une image est prise alors que le dispositif de caméra (10) est rentré par le dispositif de réglage dans le corps creux (1),
**que** le dispositif d'éclairage de lumière rasante (20) se trouve en dehors du corps creux (1) lorsque le dispositif de caméra (10) est rentré dans le corps creux (1) et
**que** la source de lumière (32) envoie un faisceau lumineux (34) sur des parois intérieures (4, 6) de l'espace creux (3, 5) et les moyens de mesure optiques (35) détectent de la lumière provenant des parois intérieures (4, 6) de l'espace creux (3, 5).

12. Procédé selon la revendication 11,
**caractérisé en ce**
**que** le dispositif de caméra (10) est rentré le long d'un axe médian d'un espace creux (3, 5) du corps creux (1) dans celui-ci.
